# EUROPEAN PATENT APPLICATION

(11) **EP 1 471 280 A1**
(43) Date of publication of application: **27.10.2004**
(21) Application number: 03700535.2
(22) Date of filing: 10.01.2003
(51) Int. Cl.: F16H 1/28

(54) **SPEED REDUCTION DEVICE**

(30) Priority: 28.01.2002 JP 2002018634
(71) Applicant: HITACHI CONSTRUCTION MACHINERY CO., LTD., Bunkyo-ku, Tokyo 112-0004 (JP)
(72) Inventor: KISE, Takeshi, Koka-gun, Shiga 529-1801 (JP); KISHIMOTO, Shingo, Koka-gun, Shiga 528-0067 (JP)
(74) Representative: Beetz & Partner Patentanwälte
(86) International application number: PCT/JP2003/000172
(87) International publication number: WO 2003/064888

(57) **Abstract**

A plural number of interlocking holes (37B) are provided in a plate member (37) of a planetary reduction gear mechanism (32) of a first stage, for interlocking engagement with circumferential grooves (35A) of pins (35) which are erected on a carrier (36). This arrangement makes it possible to restrict axial movements of planetary gears (34) and sun gear (33) by the use of a single plate member (37), without additionally using conventional stopper rings or the like. Similarly, a plural number of interlocking holes (43B) are provided in a plate member (43) of a planetary reduction gear mechanism (38) of a second stage, for interlocking engagement with circumferential grooves (41A) of pins (41) which are erected on a carrier (42). Thus, axial movements of the respective planetary gears (40) can be restricted by the use of a single plate member (43), without additionally using conventional stopper rings.

## Description

### TECHNICAL FIELD

This invention relates to a reduction gear assembly suitable for application to a swing mechanism or a travel device of a construction machine such as hydraulic excavator or hydraulic crane, or a rope winch of a hydraulic crane.

### BACKGROUND ART

Generally, construction machines such as hydraulic excavator and hydraulic cranes are largely constituted by an automotive lower structure and an upper structure which is rotatably mounted on the lower structure. A planetary gear type reduction gear assembly is usually used in a travel device mounted on the lower structure and also in a swing mechanism provided between the lower structure and the upper structure (for example, in Japanese Patent Laid-Open No. H8-247019, H9-257107).

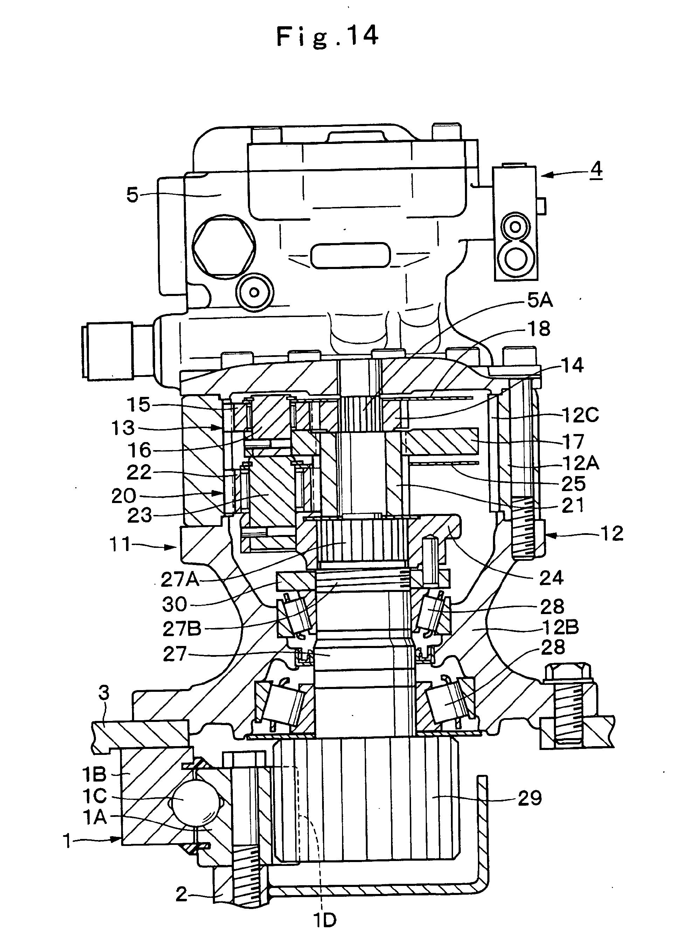

In this connection, shown in Figs. 14 to 18 is a conventional reduction gear assembly of the sort as mentioned above, which is applied to a swing mechanism of a hydraulic excavator.

In these figures, indicated at 1 is a swing ring which is provided between a lower structure and an upper structure. The swing ring 1 is composed of an inner ring 1A which is securely fixed to a round girth member 2 on the side of the lower structure, an outer ring 1B which is securely fixed to a revolving frame 3 on the side of the upper structure, and a plural number of steel balls 1C (only one steel ball is shown in the drawings) which are provided between the inner and outer rings 1A and 1B. Internal gear 1D are formed around the entire inner periphery of the inner ring 1A. As the outer ring 1B which is securely fixed to the revolving frame 3 is turned around the outer periphery of the inner ring 1A, the upper structure is turned on the lower structure.

Denoted at 4 is a swing mechanism which is provided between the lower structure and the upper structure. The upper structure (the revolving frame 3) is turned to and fro on the lower structure (the round girth member 2) by the swing mechanism 4 by transmitting rotation to the swing ring 1. In this instance, the swing mechanism 4 is largely constituted by a hydraulic motor 5 serving as a rotational drive source, and a reduction gear assembly 11 which is arranged to reduce the rotational speed of the output shaft 5A of the hydraulic motor 5 to transmit a larger rotational force (a larger torque) to the swing ring 1.

Indicated at 11 is a planetary reduction gear assembly employed for reduction of rotation of the hydraulic motor 5 (the output shaft 5A). The reduction gear assembly 11 is constituted by a housing 12, planetary reduction gear mechanisms 13 and 20, and an output shaft 27, which will be described hereinafter.

Designated at 12 is a housing of a sylindrical shape which forms the outer shell of the reduction gear assembly 11. This housing 12 is constituted by an upper housing 12A of a cylindrical shape which is located on the upper side in the axial direction, and a lower housing 12B of a stepped cylindrical shape which is located on the lower side in the axial direction. The hydraulic motor 5 is attached to the upper end of the upper housing 12A, while the lower end of the lower housing 12B is securely fixed to the revolving frame 3. Further, internal gear 12C are formed entirely around the inner periphery of the upper housing 12A for meshing engagement with the planetary gears 15 and 22 which will be described hereinafter.

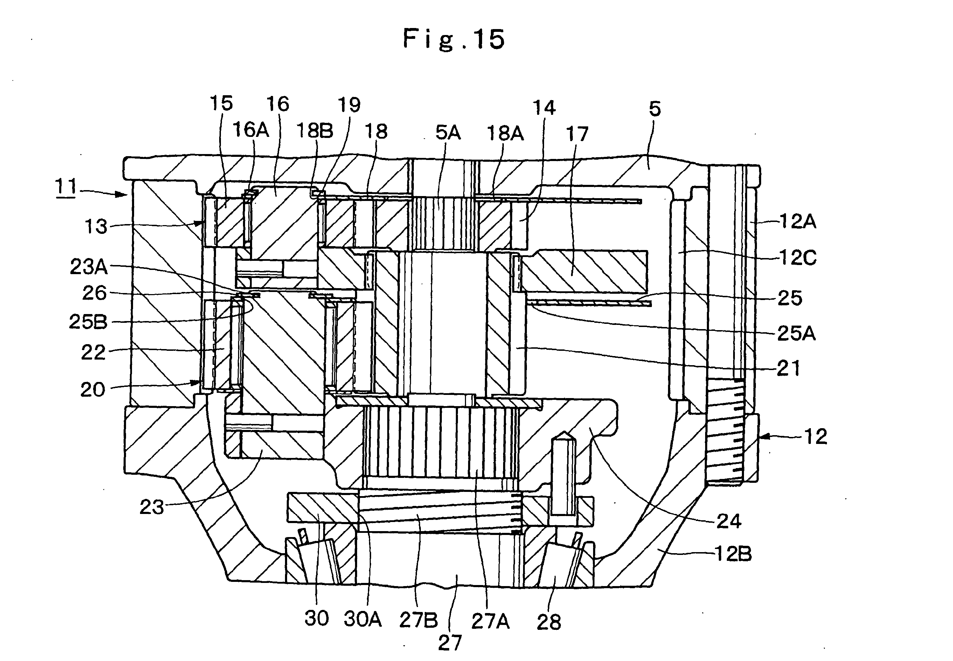

Indicated at 13 is a planetary reduction gear mechanism provided in the housing 12 as a reduction gear mechanism of the first stage. As shown in Fig. 15, this first stage planetary reduction gear mechanism 13 is largely constituted by a sun gear 14 which is coupled with the output shaft 5A of the hydraulic motor 5, a plural number of planetary gears 15 (for example, three planetary gears) which are arranged to revolve around the sun gear 14 in meshing engagement with the sun gear 14 and the internal gear 12C of the upper housing 12A, and a carrier 17 with a plural number of pins 16 (for example, three pins) provided thereon for rotatably supporting the respective planetary gears 15.

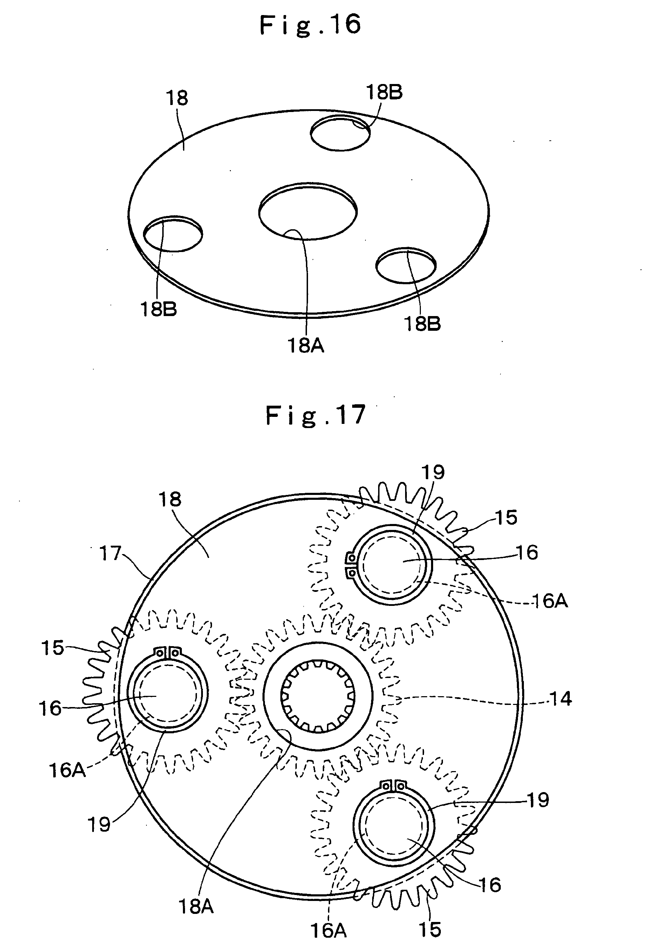

Denoted at 18 is a plate member which is provided axially at the upper end of the first stage planetary reduction gear mechanism 13. As shown in Fig. 16, the plate 18 is formed in the shape of a thin circular disk. A center hole 18A is provided at the center of the plate 18 to loosely insert the output shaft 5A of the hydraulic motor 5 therein. Three pin inserting holes 18B are bored in the outer peripheral side of the plate 18 to insert the above-mentioned pins 16 therein.

In this instance, as shown in Figs. 15 and 17, the respective pin inserting holes 18B of the plate 18 are inserted in the respective pin 16, and a stopper ring 19 is fitted within a circumferential groove 16A which is formed around an upper end portion of each pin 16. Thereby, the plate 18 is fixed relative to the pin 16 in a locked state. The plate 18 is held in abutting (sliding) contact with end faces of the sun gear 14 and each planetary gear 15 to restrict axial displacements or dislocation of the planetary gears 15 and the sun gear 14.

Indicated at 20 is second stage a planetary reduction gear mechanism which is provided on the lower side of the planetary reduction gear mechanism 13 within the housing 12 to serve as a reduction gear mechanism of the second stage. The planetary reduction gear mechanism 20 is largely constituted by a sun gear 21 which is splined with the carrier 17 of the planetary reduction gear mechanism 13, a plural number of planetary gears 22 (for example, three planetary gears) which are arranged to revolve around the sun gear 21 in meshing engagement with the sun gear 21 and internal gear 12C of the upper housing 12A, and a carrier 24 with a plural number of pins 23 (for example, three pins) for rotatably supporting the planetary gears 22.

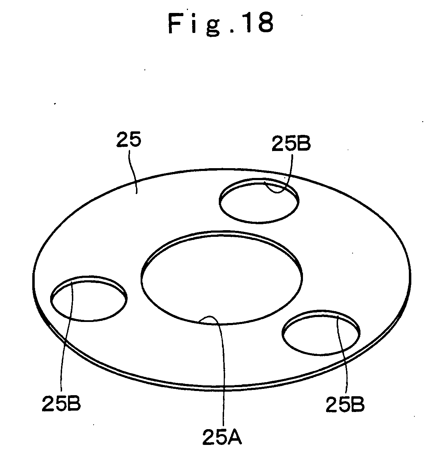

Indicated at 25 is a plate member which is provided axially at the upper end of the second stage planetary reduction gear mechanism 20. As shown in Fig. 18, the plate member 25 is formed in the shape of a thin circular disk. A center hole 25A is bored at the center of the plate member 25 to insert the sun gear 21 loosely therein. Three pin inserting holes 25B are bored in outer peripheral side of the plate 25.

In this instance, in the same way as the above-described plate member 18, the respective pin inserting holes 25B are inserted in the respective pin 23, and a stopper ring 26 is fitted within a circumferential groove 23A in an upper end portion of each one of the pins 23. Thereby, plate 25 is fixed relative to the pin 23 in a locked state. Further, the plate member 25 is held in abutting (sliding) contact with end faces of the respective planetary gears 22 thereby to restrict axial displacements of the planetary gears 22.

Designated at 27 is an output shaft which is rotatably provided within the housing 12 through upper and lower bearings 28. After speed reductions through the planetary reduction gear mechanisms 13 and 20, the rotation of the hydraulic motor 5 is transmitted to the output shaft 27. In this instance, a spline shaft (male spline) 27A is provided at the upper end of the output shaft 27 for coupling same with the carrier 24 of the planetary reduction gear mechanism 20, along with a male screw portion 27B which is located under the shaft spline 27A for threading thereon a nut 30, which will be described after.

Indicated at 29 is a pinion which is provided at the lower end of the output shaft 27. The pinion 29 is projected downward from the lower end of the lower housing 12B and meshed with internal gear 1D which are formed on the inner ring 1A of the swing ring 1. This pinion 29 serves to transmit the rotation of the output shaft 27 toword the swing ring 1 (the inner ring 1A), after two stage speed reductions through the planetary reduction gear mechanisms 13 and 20.

Denoted at 30 is a disk-like nut which is provided on an upper end portion of the output shaft 27 between the carrier 24 of the planetary reduction gear mechanism 20 and the upper bearings 28. A female screw portion 30A which is provided on the inner peripheral side of the nut 30 is held in threaded engagement with the male screw portion 27B on the output shaft 27 to apply a pressure axially on the respective bearings 28.

With the prior art reduction system 11 which is arranged as described above, as the swing mechanism 4 is put in operation to rotate output shaft 5A of the hydraulic motor 5, the rotation of the output shaft 5A is transmitted to the output shaft 27 after speed reduction through the planetary reduction gear mechanisms 13 and 20 to rotate the pinion 29 with a large torque. Whereupon, the pinion 29 which is in meshing engagement with the internal gear 1D of the inner ring 1A of the swing ring 1 is revolved along the inner ring 1A, and this revolving force of the pinion 29 is transmitted to the revolving frame 3 through the housing 12, thereby rotating the revolving frame 3 on the round girth member 2.

In the case of the prior art reduction system 11 described above, the plate member 18 is fixed on the pins 16 of the carrier 17 by use of the stopper rings 19 thereby to prevent axial dislocation of the respective planetary gears 15 in the planetary reduction gear mechanism 13, and the plate member 25 is fixed on the pins 23 of the carrier 24 by use of the stopper rings 26 thereby to prevent axial dislocation of the respective planetary gears 22 in the planetary reduction gear mechanism 20.

Therefore, in that case, it is necessary for the pins 16 of the first stage to have an increased length to locate the plate member 18 and the stopper rings 19 in overlapped relations in the axial direction. Similarly, it is necessary for the pins 23 of the second stage to have an increased length to locate the plate member 25 and the stopper rings 26 in overlapped relations in the axial direction. As a consequence, there inevitably arises a problem that the size of the reduction system 11 as a whole is increased in the axial direction.

On the other hand, at the time of assembling the first stage planetary reduction gear mechanism 13, the respective stopper rings 19 have to be fitted in the circumferential grooves 16A of the pin 16 after inserting and fitting the planetary gears 15 and the plate member 18 on the respective pins 16 of the carrier 17. Further, similarly, at the time of assembling the second stage planetary reduction gear mechanism 20, the respective stopper rings 26 have to be fitted in the circumferential grooves 23A of the pins 23 after inserting and fitting the planetary gears 22 and the plate member 25 on the pins 23 of the carrier 24.

Accordingly, the planetary reduction gear mechanisms 13 and 20 of the respective stages require an increased number of parts, that is to say, each one of the planetary reduction gear mechanisms 13 and 20 has to be assembled in an inefficient manner.

### DISCLOSURE OF THE INVENTION

In view of the above-discussed problems with the prior art, it is an object of the present invention to provide a reduction gear assembly which is compact in size as a whole and which can be assembled by the use a reduced number of parts.

In accordance with the present invention, in order to achieve the above-stated objective, there is provided a reduction gear assembly which includes: a housing of cylindrical shape to be provided with a rotational drive source, a single-stage or multi-stage reduction gear mechanism provided within the housing to reduce the speed of rotation transmitted from the rotational drive source, and an output shaft rotatably provided within the housing to transmit rotation after speed reduction through the reduction gear mechanism, the reduction gear mechanism being constituted by a sun gear, a plural number of planetary gears meshed with the sun gear, and a carrier with a plural number of pins for rotatably supporting the planetary gears thereon.

The reduction gear assembly according to the present invention is characterized in that it comprises: a plate member provided at an axial end of the reduction gear mechanism, in abutting engagement with end faces of the respective planetary gears; the plate member being provided with a plural number of interlocking holes adapted to fall into engagement with the pins of the carrier in such a way as to block movements of the planetary gears in axial direction.

With the arrangements just described, the use of conventional stopper rings can be abolished because axial movements of the respective planetary gears can be restricted by the use of a single plate member with interlocking holes which are adapted to fall into interlocking engagement with the respective pins of the carrier. The abolishment of stopper rings makes it possible to minimize the axial length of the pins and to downsize the reduction gear assembly as a whole. Further, the abolishment of stopper rings means that the reduction gear assembly involves a reduced number of parts and the efficiency of assembling work can be improved to a significant degree.

In a preferred form of the present invention, the reduction gear assembly comprises: circumferential grooves provided on and around circumferences of the pins; a plate member provided at an axial end of the reduction gear mechanism, in abutting engagement with end faces of the respective planetary gears; the plate member being provided with a plural number of interlocking holes adapted to fall into engagement with the circumferential grooves of the pins to block movements of the planetary gears in the axial direction. Therefore, the respective planetary gears are restricted of movements in the axial direction by the use of a single plate member, namely, simply by bringing the interlocking holes in the plate member into engagement with the circumferential grooves on the carrier pins.

In another preferred form of the present invention, the reduction gear assembly comprises: circumferential grooves provided on and around circumferences of the pins; a plate member provided at an axial end of the reduction gear mechanism, in abutting engagement with end faces of the respective planetary gears; the plate member being provided with a plural number of interlocking holes adapted to fall into engagement with the circumferential grooves of the pins to block movements of the planetary gears in axial direction; and the interlocking holes each being composed of a pin passisng hole serving to receive one of the pins therein, and a groove engaging hole formed radially continuously from and in partly overlapped relation with the pin passing hole for interlocked engagement with the circumferential groove of the pin. With the arrangements just described, the plate member is pushed to slide in the radial direction after placing the respective pins in the pin passing holes in the plate member. Whereupon, the groove engaging holes which are formed continuously from the pin passing holes are caused to fall into engagement with the circumferential grooves on the pins and set in position in a locked state relative to the pins.

According to the present invention, the circumferential grooves on the pins are provided at positions corresponding to end faces of the planetary gears of the reduction gear mechanism and adapted to fall into engagement with the interlocking holes in the plate member when the plate member is moved radially along the end faces of the planetary gears. Therefore, at the time of assembling the reduction gear mechanism, the interlocking holes in the plate member can be caused to fall into engagement with the circumferential grooves of the carrier pins simply by moving the plate member radially along end faces of the planetary gears which are mounted on the pins.

Further, according to the present invention, the pin passing hole of each interlocking hole is formed in a diameter larger than outside diameter of end portions of the pins, while the groove engaging hole is formed in a diameter smaller than outside diameter of end portions of the pins but slightly larger than outside diameter of the circumferential grooves. Therefore, after placing the pins in the pin passing holes, the plate member can be moved to slide in the radial direction to let the groove engaging holes fall into engagement with the circumferential grooves of the pins.

On the other hand, according to the present invention, the plate member is provided with a fitting portion to be held in fitting engagement with the sun gear, and is thereby restricted of movements in the radial direction. Thus, as long as the fitting portion of the plate member is in engagement with the sun gear, the plate member can be retained in a locked state relative to the respective pins preventing the movements of the plate member in the radial direction.

In this instance, according to the present invention, the sun gear is provided with an annular projection in concentric relation with a center axis thereof, and the fitting portion in the plate member is formed as a fitting hole to be held in fitting on and around the annular projection of the sun gear. Alternatively, according to the present invention, the sun gear is provided with an annular groove in concentric relation with a center axis thereof, and the fitting portion of the plate member is formed as an annular rim portion to be held in fitting engagement with the annular groove on the sun gear.

Further, according to the present invention, the plate member is provided with a fitting portion for fitting engagement with the carrier, and is thereby restricted of movements in radial direction. Accordingly, as long as the fitting portion of the plate member is in fitting engagement with the carrier, the plate member is restricted of radial movements and retained in a locked state relative to the respective pins.

In this instance, preferably the carrier is provided with annular groove in concentric relation with a center axis thereof, and the fitting portion of the plate member is formed as an annular rim portion to be held in fitting engagement with the annular groove of the carrier. Alternatively, according to the present invention, the carrier is provided with an annular projection in concentric relation with a center axis thereof, and the fitting portion of the plate member is provided with a fitting hole adapted to be held in fitting engagement with the annular projection of the carrier.

### BRIEF DESCRIPTION OF THE DRAWINGS

In the accompanying drawings:
Fig. 1 is a vertical sectional view of an embodiment of the reduction gear assembly according to the present invention, applied to a swing mechanism of a hydraulic excavator;
Fig. 2 is a fragmentary sectional view showing on an enlarged scale a housing, an output shaft, planetary reduction gear mechanisms, and plate members in the reduction gear assembly of Fig. 1;
Fig. 3 is a perspective view of a plate member employed for use in a planetary reduction gear mechanism of the first stage;
Fig. 4 is a plan view of the first stage planetary reduction gear mechanism including a sun gear, planetary gears, a carrier member, pins and a plate member and having the pins fitted in pin passing holes in the plate member;
Fig. 5 is a sectional view taken in the direction of arrows V-V in Fig. 4 through the sun gear, planetary gear, carrier, pin and plate member of the planetary reduction gear mechanism;
Fig. 6 is a plan view of the planetary reduction gear mechanism including the sun gear, planetary gears, carrier, pins and plate member and having groove engaging holes of the plate member in engagement with circumferential grooves of the pins;
Fig. 7 is a sectional view taken in the direction of arrows VII-VII in Fig. 6 through the sun gear, planetary gear, carrier member, pin and plate member of the planetary reduction gear mechanism;
Fig. 8 is a perspective view of a plate member employed in a planetary reduction gear mechanism of the second stage;
Fig. 9 is a vertical sectional view showing the second stage planetary reduction gear mechanism being assembled into a housing;
Fig. 10 is a vertical sectional view showing the first stage planetary reduction gear mechanism being assembled into the housing;
Fig. 11 is a vertical sectional view showing two stage planetary reduction gear mechanisms which have been assembled into the housing;
Fig. 12 is a fragmentary sectional view on an enlarged scale similar to Fig. 2 but showing a first modification of the reduction gear assembly according to the present invention;
Fig. 13 is a fragmentary sectional view on an enlarged scale similar to Fig. 2 but showing a second modification of the reduction gear assembly according to the present invention;
Fig. 14 is a vertical sectional view of a prior art reduction gear assembly which is applied to a swing mechanism of a hydraulic excavator;
Fig. 15 is an enlarged sectional view showing housing, output shaft, planetary reduction gear mechanisms, plate member of the reduction gear assembly of Fig. 14;
Fig. 16 is a perspective view of a plate member adopted by the prior art for use in a first stage planetary reduction mechanism;
Fig. 17 is a plan view of the first stage planetary reduction gear mechanism having sun gear, planetary gears, pins, plate member, stopper rings assembled together; and
Fig. 18 is a perspective view of a plate member adopted by the prior art for use in a second stage planetary reduction gear mechanism.

### BEST MODE FOR CARRYING OUT THE INVENTION

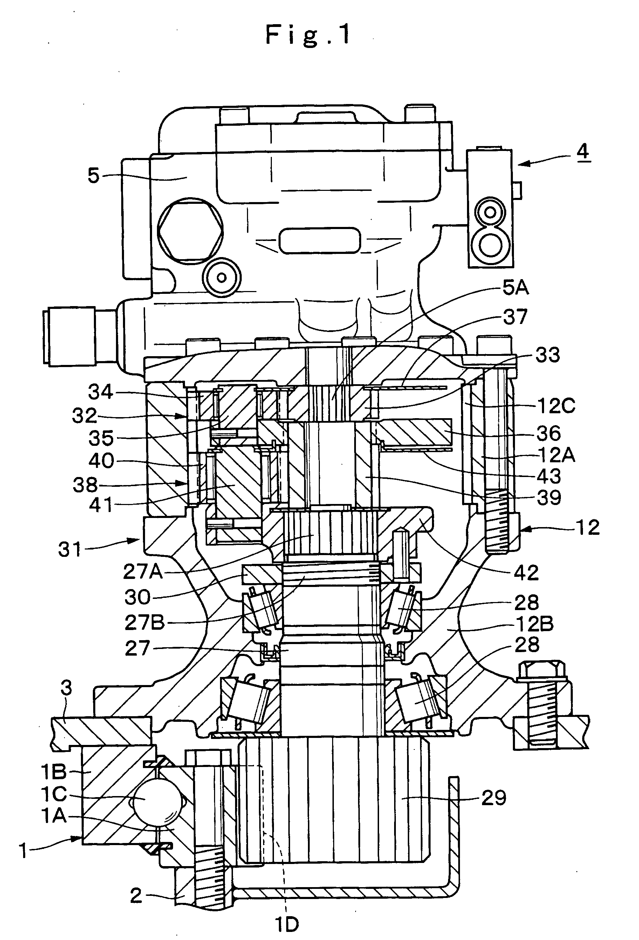

Hereafter, with reference to Figs. 1 through 13, the reduction gear assembly according to the present invention is described more particularly by way of its preferred embodiments which are applied by way of example to the swing mechanism of a hydraulic excavator. In the following description of preferred embodiments, those component parts which are identical or same as the counterparts in the above-described prior art are designated by the same reference numerals and their descriptions are omitted to avoid repetitions of the same explanations.

In the drawings, indicated at 31 is a planetary gear type reduction gear assembly which is adopted in an embodiment of the present invention, in place of the above-described reduction gear assembly 11 by the prior art. Substantially similarly to the prior art reduction gear assembly 11, the reduction gear assembly 31 according to this embodiment is constituted by a housing 12, and planetary reduction gear mechanisms 32 and 38 and an output shaft 27, which will be described hereinafter. However, the planetary reduction gear mechanisms 32 and 38 of the reduction gear assembly 31 differ from the counterparts of the prior art in construction.

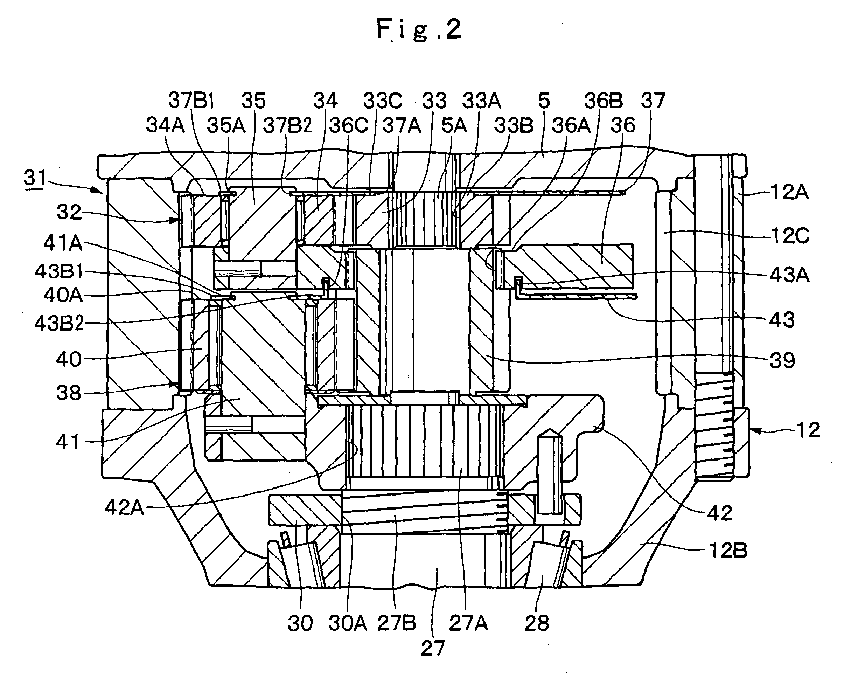

Denoted at 32 is a first stage planetary reduction gear mechanism which is provided within the housing 12. As shown in Fig. 2, this planetary reduction gear mechanism 32 is largely constituted by a sun gear 33 which is splined with the output shaft 5A of the hydraulic motor 5, three planetary gears 34 which are meshed with the sun gear 33 and internal gear 12C of the upper housing 12A so that they are revolved around the sun gear 33 while being rotated about the respective axis, a carrier 36 with three pins 35 to support the planetary gears 34 rotatably thereon, and a plate member 37 which will be described later on.

In this instance, the sun gear 33 is formed with a spline bore (female spline) 33A on its inner peripheral for coupling the output shaft 5A of the hydraulic motor 5 therewith through a spline. An annular projection 33B is provided at the center of an upper end face 33C of the sun gear 33 in concentric relation with the center axis of the sun gear 33, namely, in concentric relation with the center axis of the spline bore 33A. The annular projection 33B is fitted in a hole 37A of a plate member 37, which will be described hereinafter, to restrict radial movements of the plate member 37. The above-mentioned upper end face 33C around the annular projection 33B of the sun gear 33 provides an abutting surface for the plate member 37.

Further, the three planetary gears 34 are each rotatably supported on the top side of the carrier 36 through a pin 35. In an assembled state, the upper end faces 34A of the planetary gears 34 are held in abutting engagement with the plate member 37, and are located at a level flush with the end face 33C of the sun gear 33.

Moreover, the three pins 35 are erected in equidistant positions on the carrier 36, and are each provided an annular circumferential groove 35A in an upper end portion. Each one of the circumferential grooves 35A are adapted to engage with a groove engaging hole 37B2 of the plate member 37, which will be described hereinafter. In this instance, the circumferential grooves 35A are provided at a position which is substantially in level with the end face 34A of a planetary gear 34.

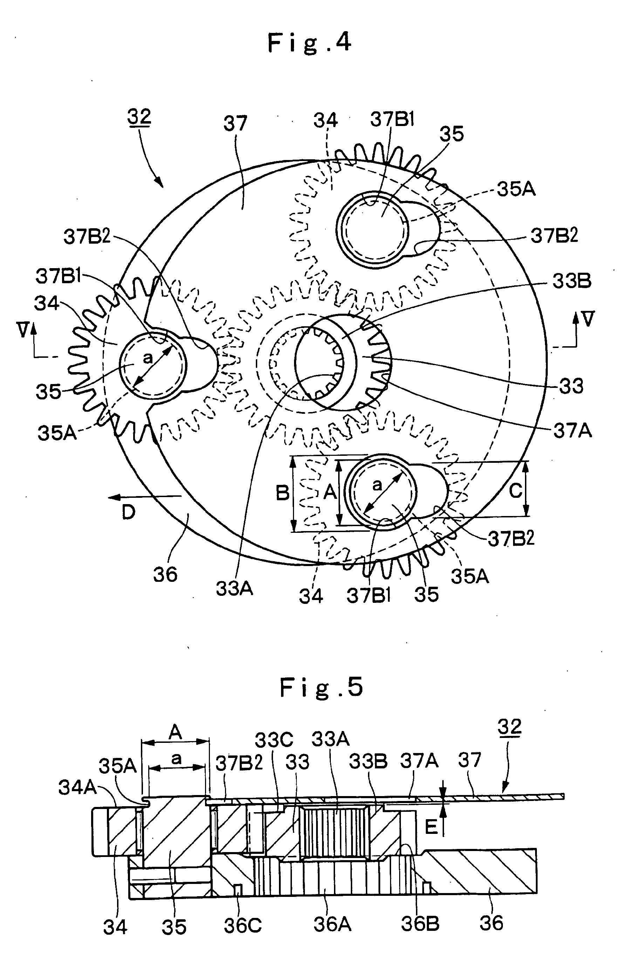

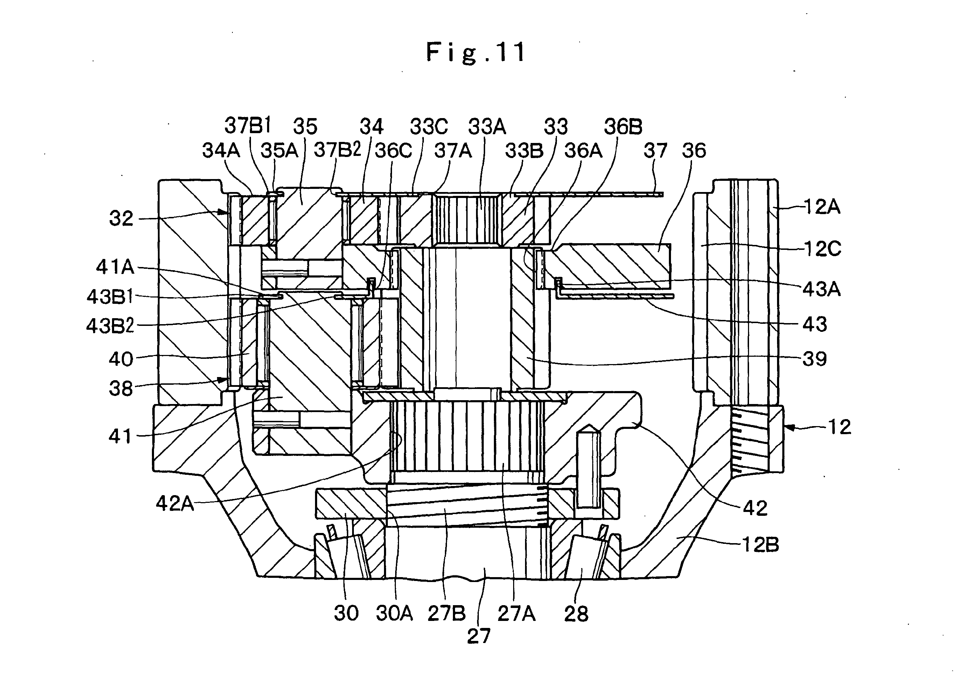

On the other hand, the carrier 36 is provided with a spline bore 36A on its inner peripheral side for coupling therewith a sun gear 39, which will be described hereinafter. A sunken groove 36B is provided centrally on the top surface of the carrier 36 in concentric relation with the center axis of the spline bore 36A. The sunken groove 36B is formed in a diameter which is slightly larger than tooth top diameter of the sun gear 33. At the time of assembling the planetary reduction gear mechanism 32, the sun gear 33 is placed in the sunken groove 36B of the carrier 36 as will be described hereinafter (see Fig. 5). As soon as the planetary reduction gear mechanisms 32 and 38 of the respective stages are assembled into the respective positions, the sun gear 33 of the first stage is pushed upward by the sun gear 39 of the second stage and spaced apart from the bottom surface of the sunken groove 36B (see Fig. 11).

Further, an annular groove 36C is provided centrally on the lower side of the carrier 36 with the center axis of the carrier 36, namely, in the concentric relation with the center axis of the spline bore 36A. This annular groove 36C is engaged with an annular rim portion 43A of a plate member 43 of the second stage, which will be described herienafter, for restricting radial movements of the plate member 43.

Indicated at 37 is a single plate member which is provided axially at the upper end of the first stage planetary reduction, gear mechanism 32. This plate member 37 is adopted in the present embodiment in place of the plate member 18 of the prior art. Further, the plate member 37 is held in abutting engagement (sliding contact) with end faces 34A of the respective planetary gears 34 and an end face 33C of the sun gear 33 to restrict movements of the planetary and sun gears 34 and 33 in the axial direction.

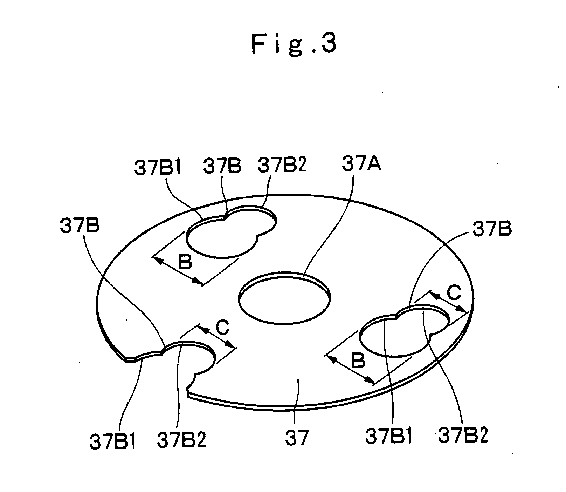

In this instance, as shown in Fig. 3, the plate member 37 is formed in a thin disk-like shape as a whole. A central fitting hole 37A is bored at the center of the plate member 37 for fitting engagement with the annular projection 33B of the sun gear 33. In addition, interlocking holes 37B are bored in an outer peripheral side of the plate member 37 for engagement with the pins 35 of the carrier 36.

Designated at 37B are the three interlocking holes which are bored in an outer peripheral side of the plate member 37. These interlocking holes 37B are brought into engagement with the pins 35 of the carrier 36 to block axial movements of the planetary gears 34 and the sun gear 33. Each one of these interlocking holes 37B is constituted by a pin inserting hole 37B1 which is inserted into the pins 35 and a groove engaging hole 37B2 which is formed continuously in a radial direction from the pin inserting hole 37B1 for interlocking engagement with the circumferential groove 35A of the pin 35.

In this connection, in a case where the upper end portion of the pin 35 has an outside diameter A and the circumferential groove 35A has an outside diameter a as shown in Figs. 3 to 5, the pin inserting hole 37B1 is formed in a diameter B which is larger than the outside diameter A of the upper end portion of the pin 35. Further, the groove engaging hole 37B2 is arranged to have a diameter C which is smaller than the outside diameter A of the upper end portion of the pin 35 but slightly larger than the outside diameter a of the circumferential groove 35A.

In this particular embodiment, one of the three interlocking holes 37B (the one which is located on the left side in Fig. 3) is in the form of a notch which is opened to an outer peripheral side of the plate member 37 due to dimensional limitations attributable to the outside diametric size of the plate member 37. However, it is to be noted that the plate member 37 is not limited to the particular shape shown in Fig. 3. For example, all of the three interlocking holes 37B may be provided in the same closed shapes by the use of a larger plate member 37.

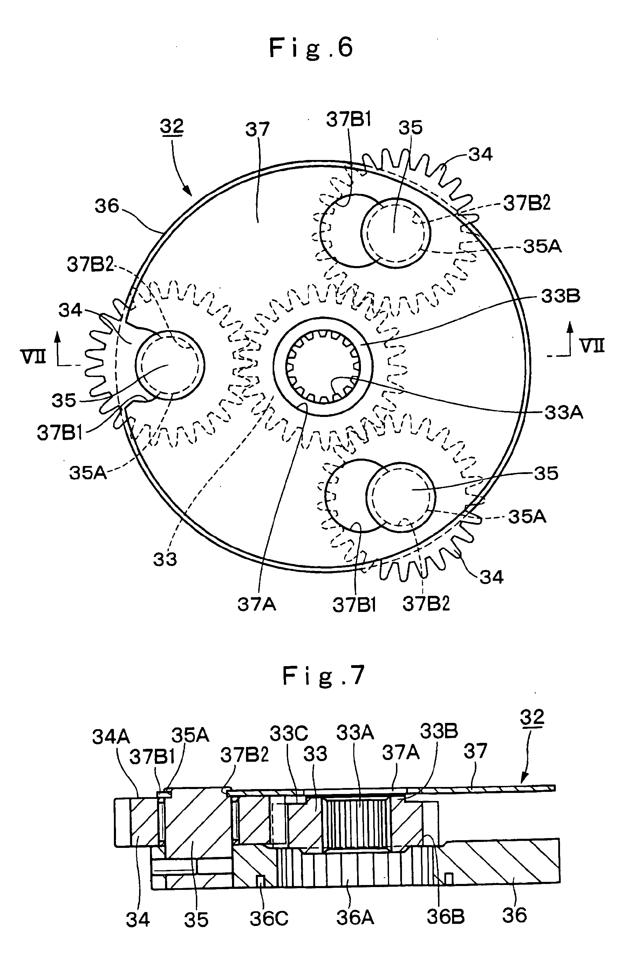

Then, the plate member 37, with the pins 35 inserted in the pin inserting holes 37B1 of the interlocking holes 37B as shown in Figs. 4 and 5, is pushed to slide in a radial direction (in the direction of arrow D in Fig. 4). As a result, the circumferential grooves 35A of the pins 35 are urged into engagement with the groove engaging holes 37B2 as shown in Figs. 6 and 7. In this case, since the diameter B of the pin inserting holes 37B1 is larger than the outside diameter A of the upper end portion of the pin 35, the pins 35 can be inserted easily into the respective pin inserting holes 37B1 of the plate member 37. Further, the diameter C of the groove engaging holes 37B2 is smaller than the outside diameter A of the upper end portions of the pins 35 but slightly larger than the diameter a of the circumferential grooves 35A, so that the plate member 37 is blocked against movements in the axial direction by the pins 35 as soon as the circumferential groove 35A of the pins 35 are engaged with the respective groove engaging holes 37B2 of the plate member 37.

As a consequence, the plate member 37 can be instantly set in position in an axially locked state by interlocking engagement with the pins 35 and prevented from dislocation without using stopper rings or the like. Accordingly, as shown in Fig. 2, the plate member 37 is held in abutting engagement (sliding contact) with the end faces 34A of the respective planetary gears 34 and the end face 33C of the sun gear 33 to retain these gears in the respective positions while restricting their spontaneous movements in the axial direction.

Further, while holding the groove engaging holes 37B2 of the plate member 37 in interlocked engagement with the circumferential grooves 35A of the pins 35 as shown in Fig. 2, the central fitting hole 37A of the plate member 37 is fitted on the annular projection 33B of the sun gear 33. Whereupon, the plate member 37 can be blocked against movements in the radial direction. Accordingly, the groove engaging holes 37B2 of the plate member 37 are prevented from disengaging from the circumferential grooves 35A of the pins 35. Therefore, when the reduction gear assembly 31 is in operation, the plate member 37 can be securely locked in position to prevent its dislocation relative to the pins 35.

Furthermore, each one of the interlocking holes 37B is constituted by the pin inserting hole 37B1 and the groove engaging hole 37B2 which is formed continuously and in partly overlapped relation with the pin inserting hole 37B1. Therefore, when the circumferential grooves 35A of the pins 35 are engaged with the groove engaging holes 37B2, part of outer peripheral portions of each pin 35 is located in the pin inserting hole 37B1. Accordingly, a lubricant oil (not shown) which is filled in the housing 12 is efficiently supplied between the planetary gears 34 and the outer peripheral portions of the pins 35 which are located within the pin inserting holes 37B1 to ensure smooth rotations of the planetary gears 34 over a long period of time.

Now, indicated at 38 is a planetary reduction gear mechanism which is provided within the housing 12 as a second stage reduction gear mechanism, under the above-described first stage planetary reduction gear mechanism 32. As shown in Fig. 2, the planetary reduction gear mechanism 38 is largely constituted by a sun gear 39 which is splined with the carrier 36 of the planetary reduction gear mechanism 32, three planetary gears 40 (only one of which is shown in the drawings) which are located between and meshed with the sun gear 39 and internal gear 12C of the upper housing 12A while revolving around the sun gear 39, a carrier 42 with a plural number of pins 41 (only one of which is shown in the drawings) to rotatably support the respective planetary gears 40 thereon, and a plate member 43 which will be described hereinafter.

In this instance, the carrier 42 is provided with a spline bore 42A on its inner peripheral side for coupling the shaft spline 27A of the output shaft 27 therewith through a spline. Thus, after speed reduction through the second stage planetary reduction gear mechanism 38, the rotation is transmitted to the output shaft 27 through the carrier 42.

Further, each one of the pins 41 which are erected on the carrier 42 is provided with an annular circumferential groove 41A around the circumference of an upper end portion. These circumferential grooves 41A are engaged with groove engaging holes 43B2 in the plate member 43, which will be described hereinafter. In this instance, the circumferential grooves 41A are provided at positions substantially at the level of the upper end face 40A of the planetary gears 40.

Indicated at 43 is a single plate member which is provided axially at the upper end of the second stage planetary reduction gear mechanism 38. The plate member 43 is adopted in the present embodiment in place of the plate member 25 of the prior art. The plate member 43 is held in abutting engagement (sliding contact) with the end faces 40A of the planetary gears 40 to restrict axial spontaneous movements of the respective planetary gears 40.

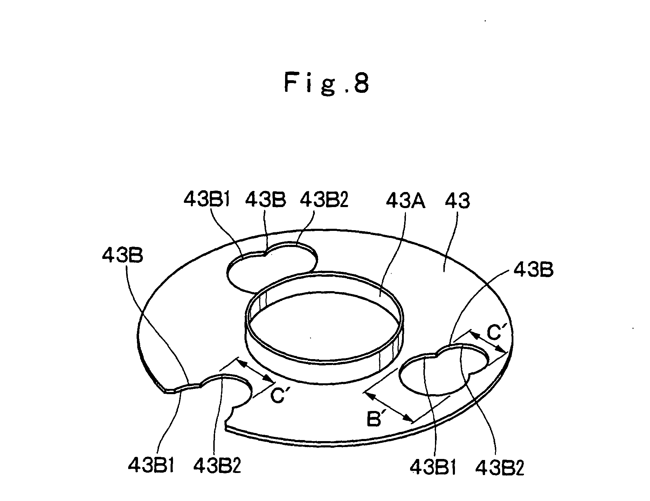

In this instance, as shown in Fig. 8, the plate member 43 is formed in a thin disk-like shape as a whole. An annular rim portion 43A is provided axially from marginal edges of a central hole of the plate member 43 to receive the sun gear 39 loosely therein. The annular rim portion 43A is fitted in the annular groove 36C in the carrier 36 of the first stage as a fitting portion. Further, interlocking hole 43B are bore in the outer peripheral side of the plate member 43 for interlocking engagement with the pins 41 of the carrier 42.

Indicated at 43B are three interlocking holes which are opened in the outer peripheral side of the plate member 43. By engagement with the pins 41 of the carrier 42, these interlocking holes 43B serve to restrict axial movements of the respective planetary gears 40. The interlocking holes 43B are each constituted by a pin inserting hole 43B1 and a groove engaging hole 43B2 which is formed continuously in the radial direction from the pin inserting hole 43B1 for interlocking engagement with the circumferential groove 41A of the pin 41.

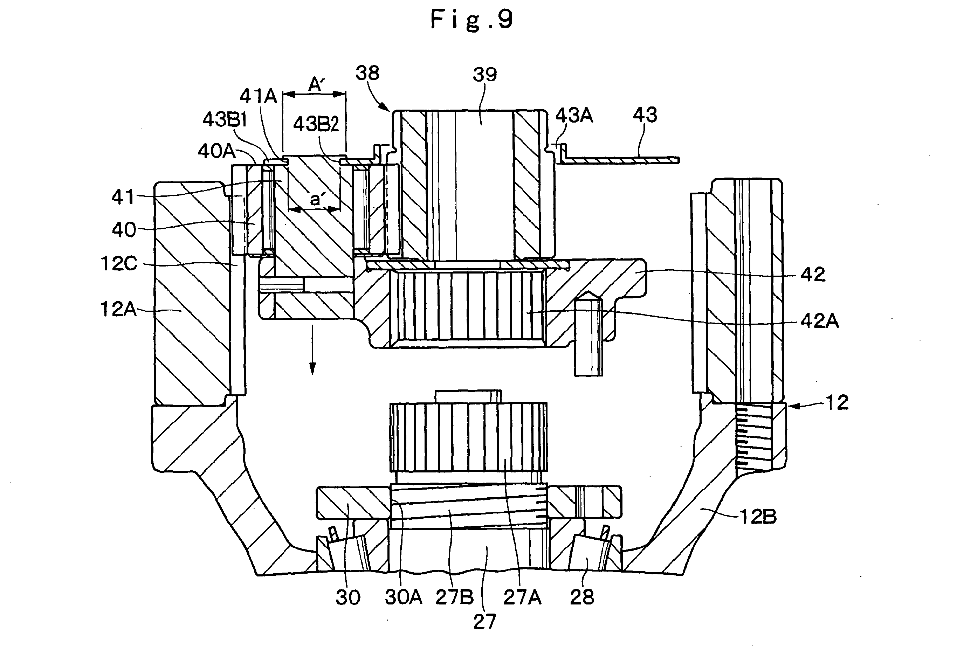

In this instance, as shown in Figs. 8 and 9, the pin inserting holes 43B1 are formed in a diameter B' which is larger than the outside diameter A' of upper end portions of the pins 41, and the groove engaging holes 43B2 are formed in a diameter C' which is smaller than the outside diameter A' of upper end portions of the pins 41 but slightly larger than the outside diameter a' of the circumferential grooves 41A.

In the particular embodiment shown, due to dimensional limitations attributable to the outside diameter of the plate member 43, one of the three interlocking holes 43B (the one which is located on the left side in Fig. 8) is formed in the shape of a notch which is opened at an outer peripheral side of the plate member 43. However, it is to be noted that the present invention is not limited to the particular forms shown in Fig. 8. For instance, all of the three interlocking holes 43B may be formed in the same shape by using a plate member 43 of a larger size.

Similarly to the above-described plate member 37, after placing the pins 41 in the pin inserting holes 43B1, the plate member 43 is pushed to slide in the radial direction, whereupon the circumferential grooves 41A of the pins 41 are brought into engagement with the groove engaging holes 43B2 of the plate member 43. In this instance, since the pin inserting holes 43B1 are formed in a diameter B' which is larger than the outside diameter A' of the upper end portions of the pins 41, the pins 41 can be easily placed in the respective pin inserting holes 43B1 of the plate member 43. Further, the groove engaging holes 43B2 are formed in a diameter C' which is smaller than the outside diameter A' of upper end portions of the pins 41 but slightly larger than the outside diameter a' of the circumferential grooves 41A. Therefore, the plate member 43 can be locked relative to the pins 41 in the axial direction as soon as the circumferential grooves 41A of the pins 41 are brought into engagement with marginal edges of the groove engaging holes 43B2 of the plate member 43.

Thus, the plate member 4 can be set in position in a locked state relative to the pins 41. Therefore, as shown in Fig. 2, the plate member 43 is held in abutting engagement (sliding contact) with end faces 40A of the respective planetary gears 40 in such a way as to restrict spontaneous movements of these gears 40 in the axial direction of the pins 41.

Further, while holding the circumferential grooves 41A of the pins 41 in engagement with the groove engaging holes 43B2 of the plate member 43, the annular rim portion 43A of the plate member 43 is fitted in the annular groove 36C of the carrier 36 as shown in Fig. 2 to restrict radial movements of the plate member 43. As a result, spontaneous disengagement of the groove engaging holes 43B2 of the plate member 43 from the circumferential grooves 41A of the pins 41 is prevented in a secure manner. Consequently, when the reduction gear assembly 31 is in operation, the plate member 43 can be retained in a locked state relative to the respective pins 41.

Moreover, each one of the interlocking holes 43B is constituted by the pin inserting hole 43B1 and the groove engaging hole 43B2 which formed continuously from the pin inserting hole 43B1 in a partly overlapped state. Therefore, when the groove engaging holes 43B2 are engaged with the circumferential grooves 41A of the pins 41, part of outer peripheral portions of each pin 41 is located within the pin inserting hole 43B1. It follows that a lubricant oil (not shown) which is filled in the housing 12 can be efficiently supplied between the outer peripheral portions of the pins 41 in the pin inserting holes 43B1 and the planetary gears 40 to ensure smooth rotations of the planetary gears 40 over a prolonged period of time.

Being arranged in the manner as described above, the reduction gear assembly of the present embodiment operates basically on the same principles as the reduction gear assembly 11 of the prior art in transmitting large rotational force to the output shaft 27 by two stage speed reductions of the rotation of the hydraulic motor 5, through the planetary reduction gear mechanisms 32 and 38.

Thus, according to the reduction gear assembly 31 of the present embodiment, the interlocking holes 37B are provided in the plate member 37 for interlocking engagement with the pins 35 of the carrier 36, and the interlocking holes 43B are provided in the plate member 43 for interlocking engagement with the pins 41 of the carrier 42. These arrangements contribute to enhance the efficiency of assembling work of the reduction gear assembly 31 to a marked degree.

Following is an explanation of assembling work of the reduction gear assembly 31. As shown in Fig. 9, for example, firstly the output shaft 27 is assembled into the lower housing 12B of the housing 12 rotatably through the bearings 28. Then, the nut 30 is threaded onto the male screw portion 27B of the output shaft 27, applying an axial pressing force on the bearing 28 by tightening the nut 30. On the other hand, the second stage planetary reduction gear mechanism 38 which has been preassembled, for example, is built into the housing 12, bringing the respective planetary gears 40 of the planetary reduction gear mechanism 38 into meshing engagement with the internal gear 12C of the upper housing 12A.

In this instance, at the time of assembling the second stage planetary gear mechanism 38, three pins 41 are planted on the carrier 42 in the first place, and then the planetary gears 40 are inserted into the pins 41. Thereafter, upper end portions of the pins 41 are put in the pin inserting holes 43B1 of the interlocking holes 43B in the plate member 43. After insertion of the pins 41 into the pin inserting holes 43B1, the plate member 43 is pushed to slide in radial direction, whereupon the groove engaging holes 43B2 are engaged with the circumferential grooves 41A of the respective pins 41. At this time, since the groove engaging holes 43B2 are formed in a diameter C' which is smaller than the outside diameter A' of upper end portions of the pins 41 but slightly larger than the diameter a' of the circumferential grooves 41A, the plate member 43 is locked relative to the pins 41 in the axial direction as soon as the groove engaging holes 43B2 of the plate member 43 are engaged with the circumferential grooves 41A of the pins 41.

As a result, it becomes possible to assemble the plate member 43 in a locked state relative to the pins 41 without using stopper rings as in the prior art described above. Thus, the respective planetary gears 40 are restricted of axial movements by the plate member 43 which is abutted against end faces 40A of these planetary gears 40. Then, the sun gear 39 is located at the center of the carrier 42 by way of the inner periphery of the annular rim portion 43A which is provided on the plate member 43, and meshed with the respective planetary gears 40 to complete the assembling of the second stage planetary reduction gear mechanism 38.

In this manner, the circumferential grooves 41A on the pins 41 are engaged with the groove engaging holes 43B2 of the interlocking holes 43B which are provided in the plate member 43. Whereupon, the plate member 43 can be set in position in a locked state relative to the pins 41 in the axial direction without using stopper rings or the like as in the prior art. Therefore, the planetary reduction gear mechanism 38 can be assembled through a reduced number of steps, in other words, at a markedly improved efficiency.

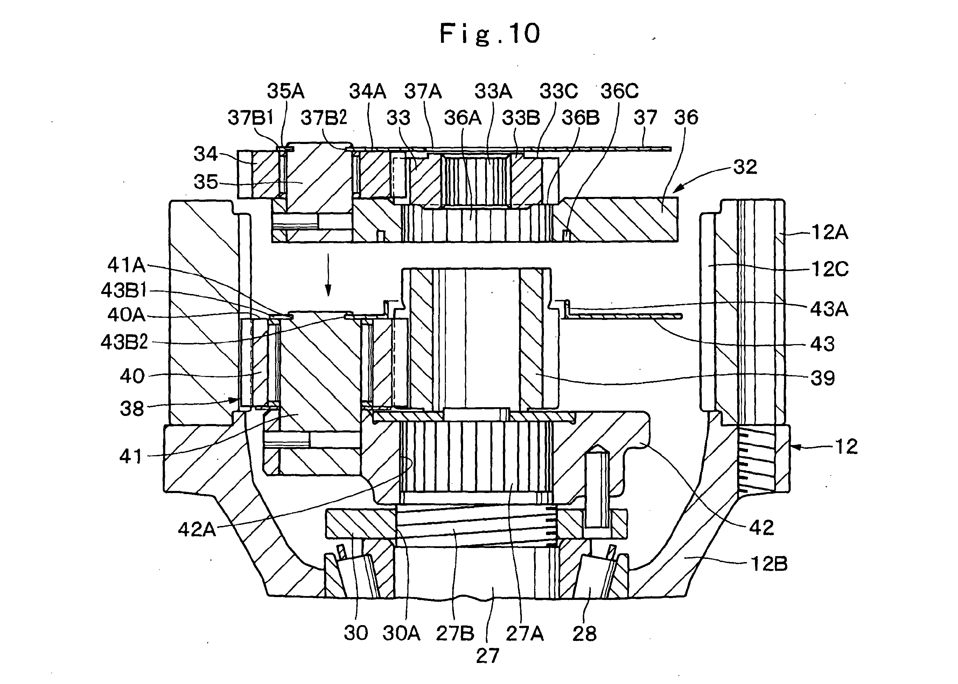

After assembling the second stage planetary reduction gear mechanism 38 into the housing 12, the first stage planetary reduction gear mechanism 32 which has been preassembled is built in the housing 12 as shown in Fig. 10.

In this instance, at the time of assembling the first stage planetary reduction gear mechanism 32, three pins 35 are planted on the carrier 36 as shown in Figs. 4 and 5. Then, the planetary gears 34 are fitted on the respective pins 35, and the sun gear 33 is set in the sunken groove 36B of the carrier 36, in meshed engagement with the respective planetary gears 34. In the next place, for mounting the plate member 37, upper end portions of the pins 35 are placed in the pin inserting holes 37B1 of the interlocking holes 37B which are bored in the plate member 37.

At this time, since the sun gear 33 is set in the sunken groove 36B of the carrier 36, a small gap space E (see Fig. 5) is left between the plate member 37 and an end face of the projection 33B of the sun gear 33 to permit the plate member 37 to slide in the radial direction.

Then, the plate member 37, with upper end portions of the pins 35 in the pin inserting holes 37B1, is pushed to slide in the radial direction (in the direction of arrow D in Fig. 4). Whereupon, the circumferential grooves 35A of the pins 35 are engaged with the groove engaging holes 37B2 of the plate member 37. As a result, the plate 37 is assembled into position in a locked state relative to the respective pins 35 to restrict axial movements of the planetary gears 34. Now, while retaining the above-mentioned gap space E, the annular projection 33B of the sun gear 33 is located in a concentric position relative to the central fitting hole 37A of the plate 37 to complete the assembling of the planetary reduction gear mechanism 32.

As described above, the circumferential grooves 35A of the pins 35 are engaged with the groove engaging holes 37B2 of the interlocking holes 37B which are bored in the plate member 37. Consequently, the plate member 37 can be locked relative to the pins 35 in the axial direction upon assembling same into position. Therefore, the planetary reduction gear mechanism 32 can be assembled through a reduced number of steps, that is to say, at an enhanced efficiency.

Next, as shown in Fig. 11, the first stage planetary reduction gear mechanism 38 is placed in the housing 12, bringing the respective planetary gears 34 into meshed engagement with the internal gear 12C of the upper housing 12A and coupling the spline bore 36A of the carrier 36 with the sun gear 39 of the second stage planetary reduction gear mechanism 38. Then, the two planetary reduction gear mechanisms 38 and 32 are assembled together within the housing 12, with the sun gear 33 of the planetary reduction gear mechanism 32 placed on the sun gear 39 of the planetary reduction gear mechanism 38.

At this time, the annular rim portion 43A which is projected from the plate member 43 of the planetary reduction gear mechanism 38 is rotatably fitted in the annular groove 36C which is provided on the lower side of the carrier 36. On the other hand, the sun gear 33 of the first stage is pushed up by the sun gear 39 of the second stage, whereupon the annular projection 33B of the sun gear 33 is rotatably fitted into the center fitting hole 37A of the plate member 37.

As a consequence, the plate member 43 of the second stage is restricted of radial movements by the engagement of the annular rim portion 43A with the annular groove 36C on the carrier 36. Further, radial movements of the plate member 37 of the first stage can be restricted by engagement of the central fitting hole 37A and the annular projection 33B of the sun gear 33. Therefore, when the reduction gear assembly 31 is in operation, the groove engaging holes 37B2 of the plate member 37 are prevented from disengaging from the circumferential grooves 35A of the pins 35, and at the same time the groove engaging holes 43B2 of the plate member 43 is prevented from disengaging from the circumferential grooves 41A of the pins 41. Accordingly, by the plate members 37 and 43, spontaneous axial movements of the planetary gears 34 and 40 are prevented securely in a reliable manner to guarantee smooth operations of the reduction gear assembly 31 over a prolonged period of time.

After assembling the planetary reduction gear mechanisms 38 and 32 into the housing 12 in the manner as described above, the hydraulic motor 5 is mounted on the housing 12, and the output shaft 5A of the hydraulic motor 5 is coupled with the spline bore 33A of the sun gear 33. As a result, the reduction gear assembly 31 is assembled as shown in Fig. 2.

Thus, in the reduction gear assembly 31 according to the present embodiment, a plural number of interlocking holes 37B in the plate member 37 to be abutted on the end faces 34A of the planetary gears 34 and the end face 33C of the sun gear 33 of the first stage planetary reduction gear mechanism 32, with the respective interlocking holes 37B (groove engaging holes 37B2) in interlocked engagement with the circumferential grooves 35A of the pins 35 on the carrier 36. Therefore, without using the conventional stopper rings, axial movements of the respective planetary gears 34 and of the sun gear 33 can be blocked by the use of a single plate member 37. Similarly, a plural number of interlocking holes 43B are provided in the plate member 43 to be abutted on the end faces 40A of the planetary gears 40 of the second stage planetary reduction gear mechanism 38, with the respective interlocking holes 43B (groove engaging holes 43B2) in interlocking engagement with the circumferential grooves 41A of the pins 41. Accordingly, axial movements of the respective planetary gears 40 can also be blocked by the use of a single plate member 43 and without using the conventional stopper rings.

This means that it becomes possible, for example, to abolish the stopper rings 19 and 26 as used in the prior art reduction gear assembly 11, and, as a result of abolishment of the stopper rings 19 and 26, it becomes possible to downsize the reduction gear assembly 31 by reducing the axial length of the pins 35 and 41.

Furthermore, abolishment of the stopper rings 19 and 26 contributes to reduce the number of component parts, to reduce the number of steps in assembling the reduction gear assembly 31 and as a result to cut the production cost of the reduction gear assembly 31.

In the case of the above-described embodiment, the plate member 37 in the planetary reduction gear mechanism 32 of the first stage is provided with the central fitting hole 37A, which is fitted on the annular projection 33B on the top side of the sun gear 33 to restrict radial movements of the plate member 37. Further, the plate member 43 in the planetary reduction gear mechanism 38 of the second stage is provided with the annular rim portion 43A, which is fitted in the annular groove 36C on the lower side of the carrier 36 to restrict radial movements of the plate member 43.

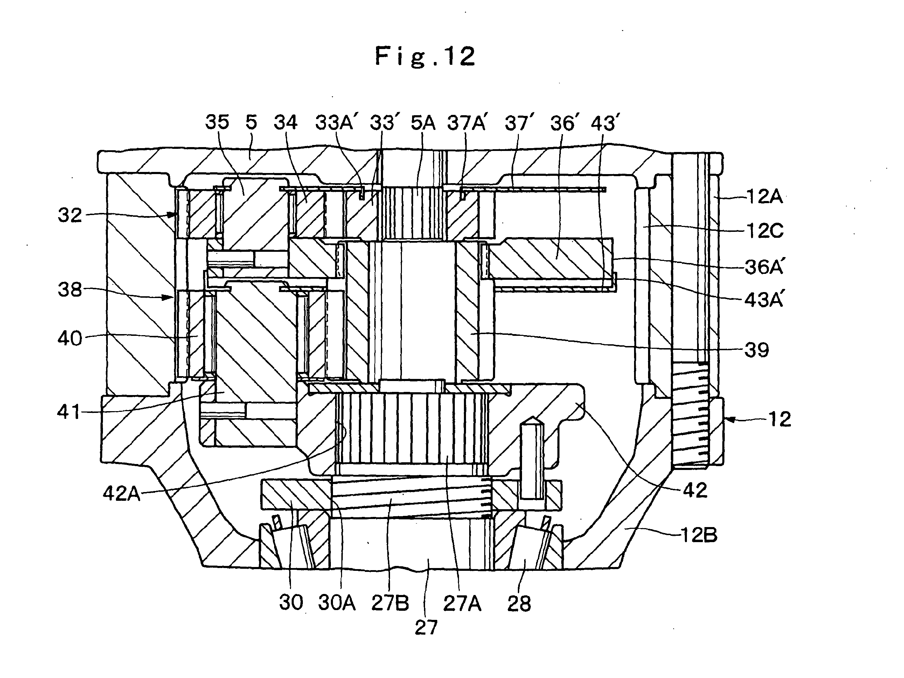

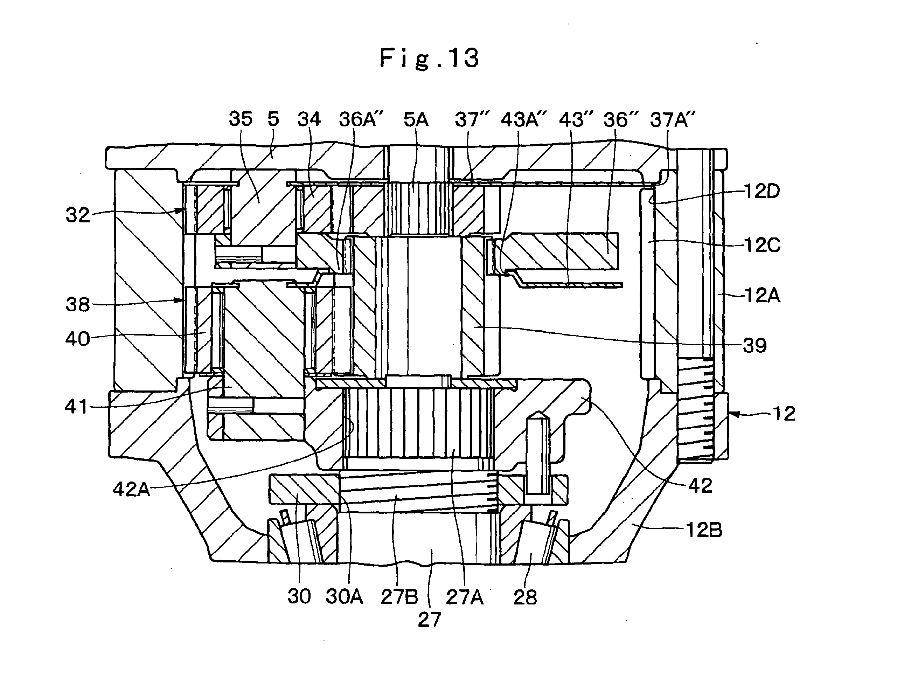

However, it is to be understood that the present invention is not limited to the particular arrangements shown. For example, the reduction gear assembly may be arranged as in a first modification shown in Fig. 12 or as in a second modification shown in Fig. 13. More specifically, in the case of the first modification shown in Fig. 12, a downwardly projecting annular rim portion 37A' as a fitting portion is provided around a center hole of a plate member 37' of the planetary reduction gear mechanism 32 of the first stage, and the annular rim portion 37A' is fitted in an annular groove 33A' which is provided on the top side of a sun gear 33' thereby to restrict radial movements of the plate member 37' . Further, an upwardly projecting annular rim portion 43A' as a fitting portion is provided around the outer periphery of a plate member 43' of the planetary reduction gear mechanism 38 of the second stage, and the annular rim portion 43A' is fitted on and around outer periphery 36A' of a carrier 36' of the first stage thereby to restrict radial movements of the plate member 43' .

In the case of the second modification shown in Fig. 13, radial movements of a plate member 37" of the planetary reduction gear mechanism 32 of the first stage are restricted by engaging outer peripheral edges 37A" of the plate 37" with inner peripheral surface 12D of the upper housing 12 with the internal gear 12C. Further, in this case, a plate member 43" of the planetary reduction gear mechanism 38 of the second stage has a central fitting hole 43A" fitted around an annular rim portion 36A" which is provided on the lower side of the carrier 36" of the first stage, thereby restricting radial movements of the plate member 43".

In the foregoing embodiments, the present invention has been described by way of the reduction gear assembly 31 which is composed of two stage planetary reduction gear mechanisms 32 and 38. However, the present invention can be applied to a reduction gear assembly employing a single planetary gear mechanism or to a reduction gear assembly employing three or more planetary gear mechanisms.

Further, in the foregoing embodiments, the reduction gear assembly 31 of the present invention is applied to a swing mechanism of a hydraulic excavator. However, the present invention can be similarly applied to other rotary drive mechanisms, for example, to a travel device to be mounted on a lower structure of a hydraulic excavator, a rope winch of a hydraulic crane or the like.

## Claims

1. A reduction gear assembly having a housing (12) of a cylindrical shape to be provided with a rotational drive source (5), a single-stage or multi-stage reduction gear mechanism (32, 38) provided within said housing (12) to reduce the speed of rotation transmitted from said rotational drive source (5), and an output shaft (27) rotatably provided within said housing (12) to transmit rotation after speed reduction through said reduction gear mechanism (32, 38), said reduction gear mechanism (32, 38) being constituted by a sun gear (33, 39), a plural number of planetary gears (34, 40) meshed with said sun gear (33, 39), and a carrier (36, 42) with a plural number of pins (35, 41) for rotatably supporting said planetary gears (34, 40) thereon, **characterized in that** said reduction gear assembly comprises:
a plate member (37, 43) provided at an axial end of said reduction gear mechanism (32, 38), in abutting engagement with end faces (34A, 40A) of the respective planetary gears (34, 40);
said plate member (37, 43) being provided with a plural number of interlocking holes (37B, 43B) adapted to fall into engagement with said pins (35, 41) of said carreir (36, 42) in such a way as to block movements of said planetary gears (34, 40) in axial direction.

2. A reduction gear assembly having a housing (12) of a cylindrical shape to be provided with a rotational drive source (5), a single-stage or multi-stage reduction gear mechanism (32, 38) provided within said housing (12) to reduce the speed of rotation transmitted from said rotational drive source (5), and an output shaft (27) rotatably provided within said housing (12) to transmit rotation after speed reduction through said reduction gear mechanism (32, 38), said reduction gear mechanism (32, 38) being constituted by a sun gear (33, 39), a plural number of planetary gears (34, 40) meshed with said sun gear (33, 39), and a carrier (36, 42) with a plural number of pins (35, 41) for rotatably supporting said planetary gears (34, 40) thereon, **characterized in that** said reduction gear assembly comprises:
circumferential grooves (35A, 41A) provided on and around circumferences of said pins (35, 41);
a plate member (37, 43) provided at an axial end of said reduction gear mechanism (32, 38), in abutting engagement with end faces (34A, 40A) of the respective planetary gears (34, 40);
said plate member (37, 43) being provided with a plural number of interlocking holes (37B, 43B) adapted to fall into engagement with said circumferential grooves (35A, 41A) of said pins (35, 41) to block movements of said planetary gears (34, 40) in axial direction.

3. A reduction gear assembly having a housing (12) of cylindrical shape to be provided with a rotational drive source (5), a single-stage or multi-stage reduction gear mechanism (32, 38) provided within said housing (12) to reduce the speed of rotation transmitted from said rotational drive source (5), and an output shaft (27) rotatably provided within said housing (12) to transmit rotation after speed reduction through said reduction gear mechanism (32, 38), said reduction gear mechanism (32, 38) being constituted by a sun gear (33, 39), a plural number of planetary gears (34, 40) meshed with said sun gear (33, 39), and a carrier (36, 42) with a plural number of pins (35, 41) for rotatably supporting said planetary gears (34, 40) thereon, **characterized in that** said reduction gear assembly comprises:
circumferential grooves (35A, 41A) provided on and around circumferences of said pins (35, 41);
a plate member (37, 43) provided at an axial end of said reduction gear mechanism (32, 38), in abutting engagement with end faces (34A, 40A) of the respective planetary gears (34, 40);
said plate member (37, 43) being provided with a plural number of interlocking holes (37B, 43B) adapted to fall into engagement with said circumferential grooves (35A, 41A) of said pins (35, 41) to block movements of said planetary gears (34, 40) in axial direction; and
said interlocking holes (37B, 43B) each being composed of a pin inserting hole (37B1, 43B1) serving to insert one of said pins (35, 41) therein, and a groove engaging hole (37B2, 43B2) formed radially continuously from and in partly overlapped relation with said pin inserting hole (37B1, 43B1) for interlocked engagement with said circumferential groove (35A, 41A) of said pin (35, 41).

4. A reduction gear assembly as defined in claim 1, 2 or 3, wherein said circumferential grooves (35A, 41A) on said pins (35, 41) are provided at positions corresponding to end faces (34A, 40A) of said planetary gears (34, 40) of said reduction gear mechanism (32, 38) and adapted to fall into engagement with said interlocking holes (37B, 43B) in said plate member (37, 43) when said plate member (37, 43) is moved radially along said end faces (34A, 40A) of said planetary gears (34, 40).

5. A reduction gear assembly as defined in claim 3, wherein said pin inserting hole (37B1, 43B1) of said interlocking hole (37B, 43B) is formed in a diameter (B, B' ) larger than an outside diameter (A, A' ) of end portions of said pins (35, 41), while said groove engaging hole (37B2, 43B2) is formed in a diameter (C, C' ) smaller than said outside diameter (A, A' ) of end portions of said pins (35, 41) but slightly larger than outside diameter (a, a' ) of said circumferential grooves (35A, 41A).

6. A reduction gear assembly as defined in claim 1, 2 or 3, wherein said plate member (37, 37' ) is provided with a fitting portion (37A, 37A' ) to be held in fitting engagement with said sun gear (33, 33' ), and is thereby restricted of movements in radial direction.

7. A reduction gear assembly as defined in claim 6, wherein said sun gear (33) is provided with an annular projection (33B) in concentric relation with a center axis thereof, and said fitting portion (37A) in said plate member (37) is formed as a fitting hole (37A) to be held in fitting on and around said annular projection (33B) of said sun gear (33).

8. A reduction gear assembly as defined in claim 6, wherein said sun gear (33') is provided with an annular groove (33A' ) in concentric relation with a center axis thereof, and said fitting portion (37A' ) of said plate member (37' ) is formed as an annular rim portion (37A' ) to be held in fitting engagement with said annular groove (33A' ) on said sun gear (33' ).

9. A reduction gear assembly as defined in claim 1, 2, or 3, wherein said plate member (43, 43" ) is provided with a fitting portion (43A, 43A" ) for fitting engagement with said carrier (36, 36" ), and is thereby restricted of movements in radial direction.

10. A reduction gear assembly as defined in claim 9, wherein said carrier (36) is provided with an annular groove (36C) in concentric relation with a center axis thereof, and said fitting portion (43A) of said plate member (43) is formed as an annular rim portion (43A) to be held in fitting engagement with said annular groove (36C) of said carrier (36).

11. A reduction gear assembly as defined in claim 9, wherein said carrier (36") is provided with an annular projection (36A") in concentric relation with a center axis thereof, and said fitting portion (43A") of said plate member (43") is provided with a fitting hole (43A") adapted to be held in fitting engagement with said annular projection (36 A" ) of said carrier (36" ).
